# EUROPEAN PATENT SPECIFICATION

(11) **EP 1 310 184 B1**
(45) Date of publication and mention of the grant of the patent: **28.04.2004**
(21) Application number: 02257687.0
(22) Date of filing: 06.11.2002
(51) Int. Cl.: A45B 19/00, A45B 11/00

(54) **Portable shade**
Tragbarer Schirm
Ecran portable

(30) Priority: 06.11.2001 US 347810 P
(43) Date of publication of application: 14.05.2003
(73) Proprietor: Prince Lionheart, Inc., Santa Maria, CA 93455 (US)
(72) Inventor: Henley, Michael E., California 93460 (US); McConnell, Thomas E., California 93460 (US)
(74) Representative: McLeish, Nicholas Alistair Maxwell

(56) References cited:
- DE-A- 19 815 849
- US-A- 4 312 371
- US-A- 4 607 653
- US-A- 4 675 916
- US-A- 5 277 213

## Description

### BACKGROUND OF THE INVENTION

The present invention generally relates to portable shades, and more specifically relates to portable shades that can be quickly and easily converted between a folded, compact state and an unfolded, deployed state with minimum effort. Such a shade is known from US-A-4 312 371.

It is widely known that sunlight can injure people in several ways. For instance, a person's exposed, unprotected skin be sunburned, or a person can burn themselves on objects left exposed to the sun's heat.

These hazards are especially appreciated by parents with small children. For example, a car seat left in a hot car for hours can reach extremely high temperatures, and placing a small child on such a hot seat can upset and possibly injure the child. Likewise, a child can get a sunburn when transported outside in a stroller. Since parents are typically in charge of the welfare of their small children, parents usually take steps to protect children from the harmful effects of the sun.

To this end, some parents currently use a shade to protect a child from the effects of the sun. For instance, when transporting a child in a stroller, such a shade is positioned over the cradle-area of the stroller. These shades are typically made of sun-blocking material which is supported by rigid frames. However, prior art shades are not collapsible or are only partially collapsible (i.e., the material collapses, but the frame members remain in their original, rigid configuration). Thus, these shades can be inconvenient, bulky, and difficult to transport. Therefore, it is appreciated that there is a need for a shade that is collapsible and portable.

### BRIEF SUMMARY OF THE INVENTION

In response to the aforementioned needs, there is disclosed herein a collapsible shade adapted to partially block sunlight, wind and/or rain and capable of being easily positioned in both a deployed and collapsed configuration. The shade includes a first and second side panel joined by an unsupported intermediate sheet. In one embodiment, the first and second side panels and the intermediate sheets are made of a reflective material. The first and second side panel as well as the intermediate sheet are all made out of a flexible material. The shade also includes a first resilient frame member which is fastened to the first side panel and a second resilient frame member which is fastened to the second side panel. Both frame members are adapted so as to unfurl the respective side panel and hold it in tension when the shade is in the deployed configuration. The frame members are also each capable of being twisted into at least one loop when the shade is in the collapsed configuration, and the looped frame members are overlaid when the shade is in the collapsed configuration.

In one aspect, the shade is adapted to be removably attached to a child car seat. As such, the shade can inhibit the surface temperature of the car seat from rising and preferably prevent a child from being exposed to high surface temperatures on the seat. Also, due to the resilient frame members, the user can quickly deploy the shade for use on the car seat and can quickly collapse the shade for more convenient movement and storage.

In another aspect, the shade is adapted to be removably attached to a stroller. A portion of the first side panel and second side panel includes a mesh section, which allows ventilation through the shade device, and in one embodiment, the intermediate sheet additionally includes a mesh section for added ventilation. In one embodiment, the first side panel, second side panel, and intermediate sheet are made out a waterproof material. Also, the shade includes straps that can be removably secured to the stroller to prevent the shade from inadvertently falling from the stroller. Also, a portion of the intermediate sheet includes a section of transparent material which a user may see through while pushing the stroller. In one embodiment, the shade includes a front flap which freely extends off of the front of the intermediate sheet for more coverage and protection of the stroller occupant. Similarly, the shade includes a back flap which freely extends off of the back of the intermediate sheet for added coverage and protection of the stroller occupant. As such, the shade can shield the occupant from sunlight, high winds, insects, inclement weather, and the like. Also, due to the resilient frame members, the user can quickly deploy the shade for use on the car seat and can quickly collapse the shade for more convenient movement and storage.

### BRIEF DESCRIPTION OF THE DRAWINGS

These as well as other features of the present invention will become more apparent upon reference to the drawings wherein:
Figure 1 is a front, perspective view of a portable shade device of the present invention;
Figure 2 is a front view of the shade device of Figure 1;
Figure 3 is a right side view of the shade device of Figure 1, the left side being a mirror image thereof;
Figure 4 is a rear view of the shade device of Figure 1;
Figure 5 is a side view of the portable shade device of Figure 1, positioned atop a conventional car-seat;
Figure 6A is a front, perspective view of the portable shade device of Figure 1, illustrating a manner in which the shade device can be collapsed;
Figure 6B is a front, perspective view of the shade device of Figure 1 shown in a partially collapsed state;
Figure 6C is a detail view of the shade device of Figure 1, illustrating a grip used to fully collapse the shade device;
Figure 6D is a detail view of the shade device of Figure 1, illustrating a grip used to fully collapse the shade device;
Figure 6E is a perspective view of the shade device of Figure 1, shown in its collapsed configuration;
Figure 7 is a front, perspective view of another embodiment of a portable shade device of the present invention;
Figure 8 is a front view of the shade device of Figure 7;
Figure 9 is a side view of the shade device of Figure 7;
Figure 10 is a side view of the shade device of Figure 7 positioned atop a conventional stroller;
Figure 11 is a rear view of the shade device of Figure 7 positioned atop a conventional stroller;
Figure 12 is a front, perspective view of another embodiment of a portable shade device of the present invention;
Figure 13 is a front view of the shade device of Figure 12;
Figure 14 is a side view of the shade device of Figure 12;
Figure 15 is a side view of the shade device of Figure 12, shown positioned over a stroller;
Figure 16 is back view of the shade device of Figure 12, shown positioned over a stroller.

### DETAILED DESCRIPTION OF THE INVENTION

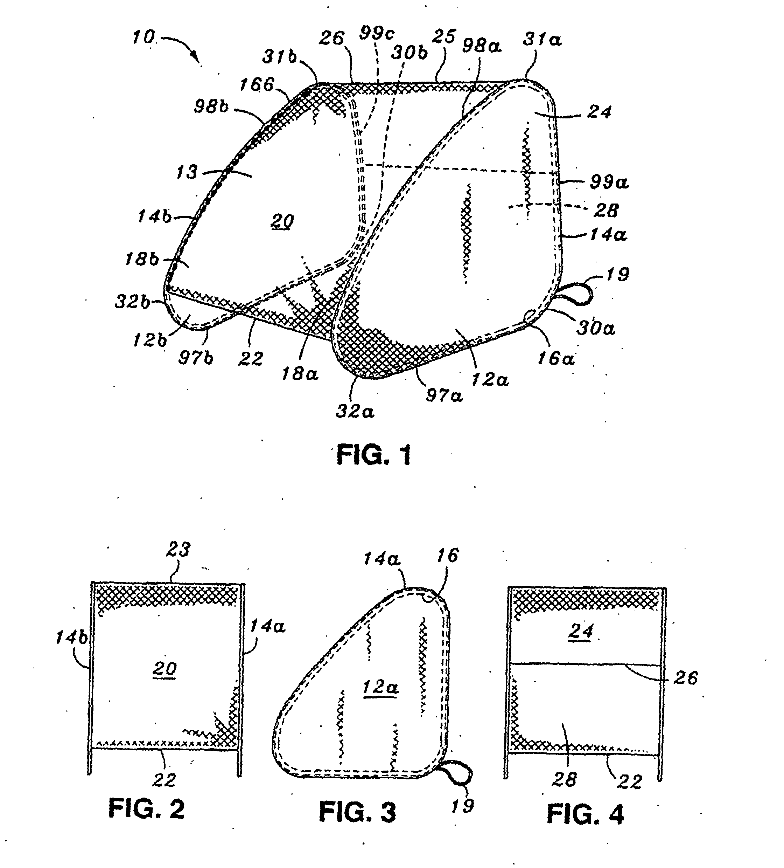

Referring now to the drawings wherein the showings are for purposes of illustrating preferred embodiments of the present invention only, and not for purposes of limiting the same, Figures 1-4 illustrate one embodiment of a collapsible shade device 10 of the present invention. As shown, the device 10 includes two side panels 12a, 12b. Each side panel 12a, 12b is flat and generally triangular in shape so as to define a first edge 97a, 97b, a second edge 98a, 98b, a third edge 99a, 99b, a first corner 30a, 30b, a second corner 31a, 31b, and a third corner 32a, 32b, respectively. In the embodiment shown, the first, second, and third corners 30a-32b are rounded. In the preferred embodiment, the side panels 12a, 12b are made out of collapsible, reflective material capable of blocking sunlight. For example, in one embodiment, the side panels 12a, 12b are made out of SPF 50 nylon, although other cloth materials, flexible plastic sheets, or woven materials could alternatively be used without departing from the spirit of the invention.

Also, the device 10 comprises an intermediate sheet 13. In one embodiment, the intermediate sheet 13 is a flat sheet and is rectangular in shape so as to define a front edge 22, a rear edge 26, and opposing side edges 18a, 18b. Preferably, the intermediate sheet 13 is made out of collapsible, reflective material capable of blocking sunlight, such as SPF 50 nylon. In the embodiment shown, the intermediate sheet 13 extends between and attaches the side panels 12a, 12b such that the intermediate sheet 13 is generally perpendicular to the side panels 12a, 12b. More specifically, in one embodiment, the side edges 18a, 18b of the intermediate sheet 13 are attached along the second edges 98a, 98b and third edges 99a, 99b of the side panels 12a, 12b. In one embodiment, the intermediate sheet 13 is attached along substantially the entire length of the second edges 98a, 98b, but is attached along only a portion of the length of the third edges 99a, 99b of the side panels 12a, 12b. Furthermore, in the preferred embodiment, attachment of the intermediate sheet 13 to the side panels 12a, 12b is achieved by sewing methods widely known in the art.

It is noted that attachment of the intermediate sheet 13 to the side panels 12a, 12b in the manner described above defines a cavity 28. In other words, the cavity 28 is defined by the side panels 12a, 12b and the intermediate sheet 13, and in the embodiment shown, an opening 29 (i.e., the space between the first edges 97a, 97b and a portion of the third edges 99a, 99b) provides access to the cavity 28.

Additionally, the preferred embodiment of the device 10 comprises channels 16a, 16b. In one embodiment, each channel 16a, 16b is an enclosed passage formed by folding and sewing extra material over the edges 97a-99b of the side panels 12a, 12b. Each channel 16a, 16b continuously extends around the first, second, and third edges 97a-99b of the side panels 12a, 12b, respectively.

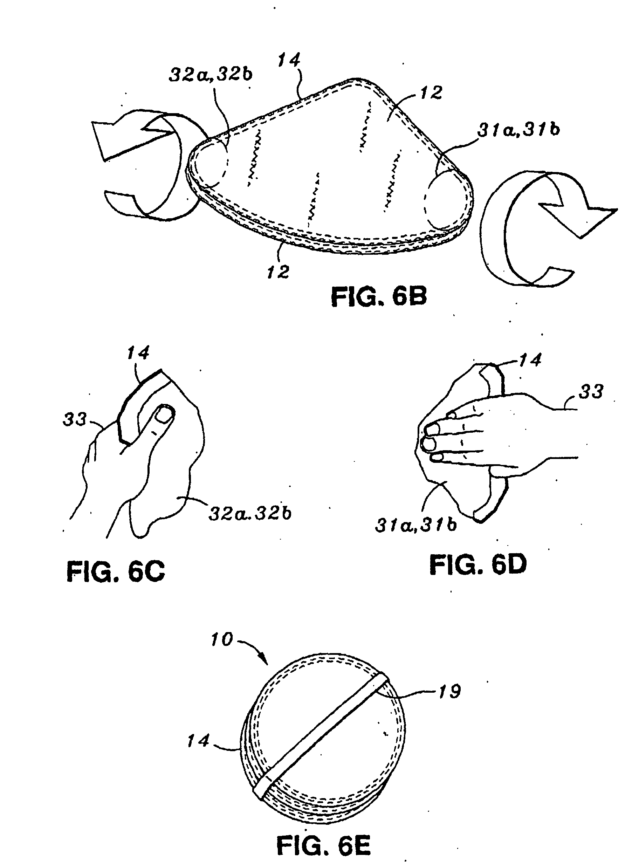

As shown in Figures 1-4, the device 10 further comprises frame members 14a, 14b. In one embodiment, the frame members 14a, 14b are made out of a long, rod-like, flexible and resilient material. In the embodiment shown, the frame members 14a, 14b are continuous and triangularly shaped and are positioned within respective channels 16a, 16b. In one embodiment, the frame members 14a, 14b are made out of stainless steel; however, other embodiments are made out of other lightweight metals or polymer materials without departing from the spirit of the invention. As will be described in greater detail below, the frame members 14a, 14b allow the device to be quickly and easily articulated in either a deployed configuration (shown in Figures 1-4) or a collapsed, stowed configuration (shown in Figure 6E). More specifically, the frame members 14a, 14b exhibit sufficient structural memory/rigidity to unfurl the side - panels 12a, 12b and retain the side panels 12a, 12b in tension when the device 10 is in the deployed configuration. However, the frame members 14a, 14b are also flexible enough such that the frame members 14a, 14b can be twisted and laid over each other so as to resemble a relatively small coil. Thus, the frame members 14a, 14b provide proper support to unfurl the first and second side panels 12a, 12b, and yet the frame members 14a, 14b allow the device 10 to be collapsed for convenience and portability. Also, in the preferred embodiment, the resilience of the frame members 14a, 14b causes each to move from its coiled state to its free state on its own in a relatively short time. As such, the device 10 can be deployed easily and quickly.

It is noted that some prior art devices include resilient frame members of the type described hereinabove. For instance, U.S. Patent No. 5,964,533 to Ziglar, 5,816,279 to Zheng, and 5,971,188 to Kellogg et al. each include frame members that can be quickly changed between a deployed configuration and a collapsed configuration. Thus, these patents are incorporated in their entirety by reference.

Moreover, in one embodiment, the device 10 includes a strap 19. The strap is an elastic band that is attached to the first edge 97a of the side panel 12a in the embodiment shown; however, the strap 19 could be attached to any of the edges 97a-99b without departing from the spirit of the invention. As will be described in greater detail below, the strap 19 retains the frame members 14a, 14b in their collapsed configuration for more convenient portability of the device.

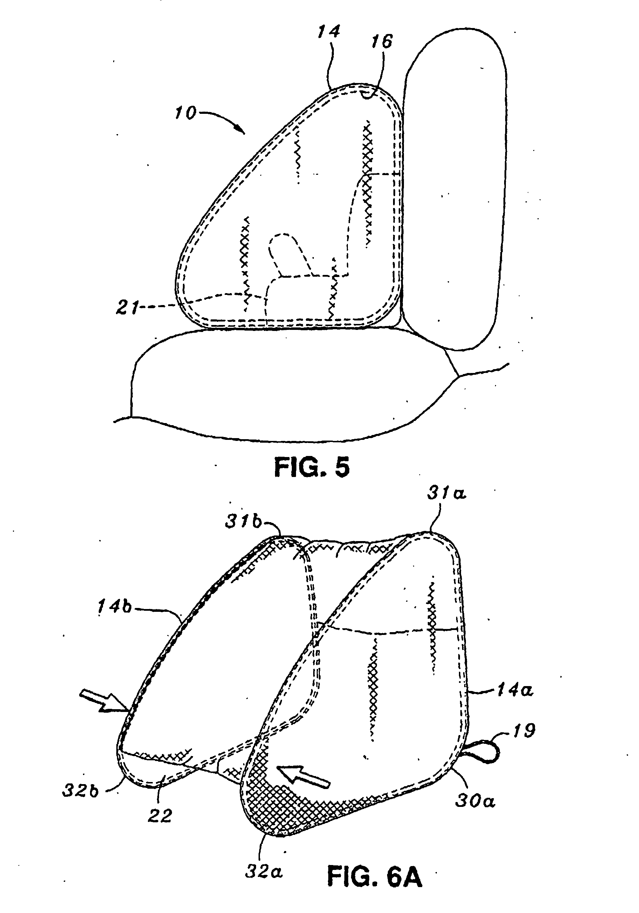

Turning now to Figure 5, the device 10 is shown in operation. As illustrated, the device 10 is positioned over a conventional car seat 21. More specifically, the device 10 is positioned such that the car seat 21 resides in the cavity 28 of the device 10. In the preferred embodiment, the car seat 21 is wide enough such that the device 10 frictionally fits over the car seat 21 and the device 10 remains upright and in place. However, the device 10 can be propped up by external means such as a car door (not shown) if the car seat 21 is too narrow for a frictional fit. Thus, the device 10 reflects sunlight away from the car seat 21 to thereby inhibit the surface temperature of the car seat 21 from rising. Advantageously, after the device 10 is removed, the child can be placed within the car seat 21 and is less likely to be harmed by the surface temperature of the car seat 21.

Turning now to Figures 6A through 6E, a process of moving the device 10 from a deployed configuration (Figure 6A) to a collapsed configuration (Figure 6E) is illustrated. Referring initially to Figure 6A, the side panels 12a, 12b are moved toward each other (as represented by the arrows in Figure 6A) until they touch each other. This causes the intermediate sheet 13 to gather and become folded and disposed between the side panels 12a, 12b.

Next, as shown in Figures 6B-6D, a user grabs the second corners 31a, 31b with one hand 33 and the third corners 32a, 32b with another hand 33. Then the hands 33 are counter-rotated in a twisting motion as indicated by the circular arrows in Figure 6B. This causes the frame members 14a, 14b to each coil upon itself, resulting in further collapse of the device 10. As the hands 33 are brought further together, the coiled frame members 14a, 14b arrange themselves atop one another until the device 10 reaches its collapsed configuration represented in Figure 6E.

At this point, the strap 19 can be stretched over the device 10, to inhibit the device 10 from inadvertently becoming uncoiled. In another embodiment in which the strap 19 is not included, the collapsed device 10 is stored in a bag (not shown), and the bag inhibits the device 10 from inadvertently moving from the collapsed configuration to the deployed configuration.

It is understood that when the device 10 is in the collapsed configuration, it is relatively compact. This compactness, in addition to the lightweight materials used, advantageously allows for more convenient transport and stowing of the device 10.

When the user wishes to deploy the device 10, the user either removes the strap 19 from over the device 10 or removes the device from its storage bag. Then, due to the resiliency, i.e. structural memory, of the frame members 14a, 14b, the frame members 14a, 14b uncoil and return to their generally triangular shape. As the frame members 14a, 14b uncoil, they cause the side panels 12a, 12b to unfurl. Preferably, the frame members 14a, 14b uncoil instantaneously and automatically for added convenience.

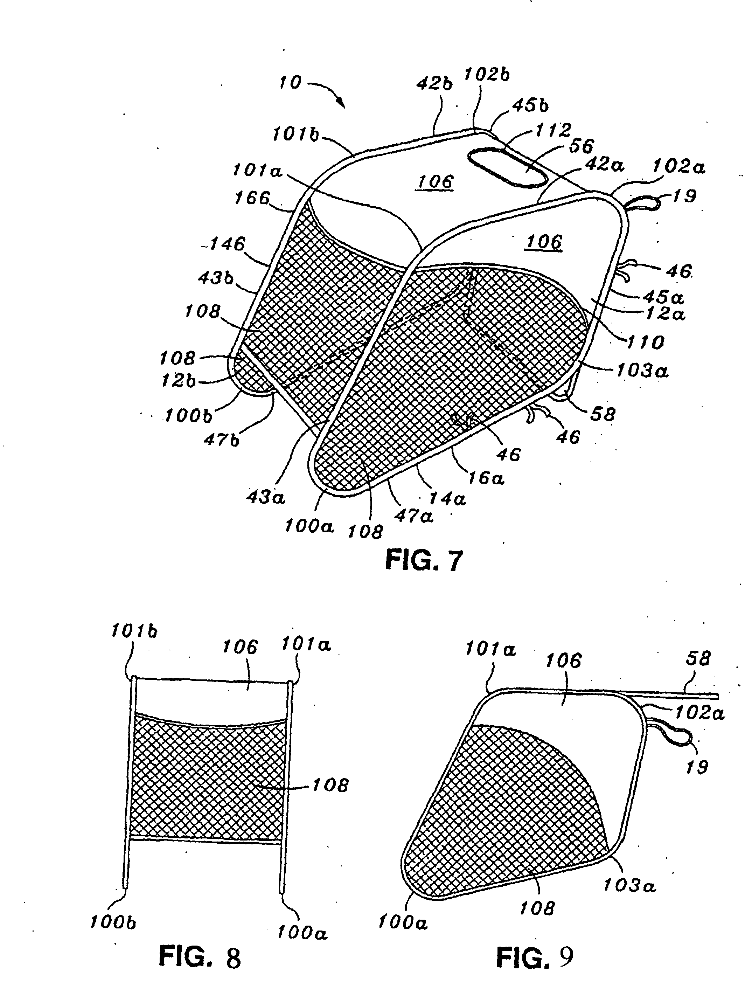

Turning now to Figures 7 through 9, an alternative embodiment of the device 10 is illustrated. The device 10 shown is similar to the device 10 described above in relation to Figures 1 through 6E with differences that will be discussed in more detail below. The device 10 pictured is adapted to be fit over a conventional stroller to protect the child-occupant from sunlight, strong gusts of wind, rain, insects, and the like. Also, the device 10 is also adapted to allow the child-occupant to see out from inside the stroller and to provide ventilation for the child-occupant of the stroller.

In the embodiment shown, the side panels 12a, 12b are polygonal in shape so as to define a top edge 42a, 42b, a bottom edge 47a, 47b, a front edge 43a, 43b, a rear edge 45a, 45b, a first corner 100a, 100b, a second corner 101a, 101b, a third corner 102a, 102b, and a fourth corner 103a, 103b. In the embodiment shown, the corners 100a-103b are all rounded.

Like the side panels 12a, 12b discussed above in relation to Figures 1 through 6E, the side panels 12a, 12b of the device 10 shown in Figures 7 through 9 are made out of collapsible material. However, the side panels 12a, 12b include a solid section 106 and a mesh section 108. The solid section 106 is made out of a material that is reflective and generally impervious to air flow, such as SPF 50 Nylon. In other embodiments, other cloth materials, flexible plastic sheets, or woven materials are alternatively used without departing from the spirit of the invention. In the embodiment shown, the solid section 106 is generally triangular and is - positioned adjacent the third corner 102a, 102b of the respective side panel 12a, 12b. The mesh section 108 is also made out of a material that is reflective, but the mesh section 108 comprises a plurality of small holes through which air may pass. In one embodiment, the mesh section 108 is made out of a nylon mesh material. The mesh section 108 is generally triangular and is positioned adjacent the first corner 100a, 100b of the respective side panel 12a, 12b. The mesh section 108 is attached to the solid section 106 at an intersection edge 110, which generally extends between the second corner 101a, 101b and fourth corner 103a, 103b, respectively. In the preferred embodiment, the mesh section 108 is attached to the solid section 106 at the intersection edge 110 via a sewing process widely known in the art.

As shown in Figures 7 through 9, the device 10 includes an intermediate sheet 13, similar to the intermediate sheet 13 described above in relation to Figures 1 through 6E; however, in this alternative embodiment, the intermediate sheet is attached to the side panels 12a, 12b respectively along the front edges 43a, 43b and the top edges 42a, 42b. In one embodiment, the intermediate sheet 13 is attached along the front edges 43a, 43b and the top edges 42a, 42b via a sewing process widely known in the art.

As shown in Figures 7 and 9, attachment of the intermediate sheet 13 to the top edges 42a, 42b terminates adjacent the third corners 102a, 102b. However a length of the intermediate sheet 13 extends therefrom, unattached to either side panel 12a, 12b so as to define a rear flap 58. Since the rear flap 58 is not attached to either side panel 12a, 12b, the rear flap 58 can be positioned between the side panels 12a, 12b (shown in Figure 7) or be pivoted so as to extend parallel from the top edges 42a, 42b (shown in Figure 9).

In the preferred embodiment, the intermediate sheet 13 also includes a solid section 106 and a mesh section 108 much like the side panels 12a, 12b as described above. In the embodiment shown, the solid section 106 generally extends between the second corners 101a, 101b and the third corners 102a, 102b, and the entire rear flap 58 is also a solid section 106. The mesh section 108 extends generally between the first corners 100a, 100b and the second corners 101a, 101b. As before, the mesh section 108 is attached to the solid section 106 via a sewing process widely known in the art.

In the embodiment shown, the device 10 includes a rectangular opening 112 in the intermediate sheet 13 approximately half way between the side panels 12a, 12b and adjacent the third corners 102a, 102b. In the preferred embodiment, an observation window 56 covers the opening 112. In one embodiment, the observation window 56 is made out of a transparent material, such as transparent vinyl, and is attached to the intermediate sheet 13 via a sewing process widely known in the art. As will be described in greater detail below, when the device 10 is positioned on a stroller, a user can conveniently see inside the stroller through the observation window 56 while pushing and without having to remove the device 10.

Like the device 10 described above in relation to Figures 1 through 6E, the device 10 shown in Figures 7 through 9 includes channels 16a, 16b through which flexible, resilient frame members 14a, 14b are routed, and the frame members 14a, 14b unfurl the side panels 12a, 12b when the device 10 is in the deployed configuration. Also, the frame members 14a, 14b of the device 10 shown in Figures 7 through 9 are capable of being flexed, coiled, and folded so as to change the device 10 into the collapsed configuration. The procedure described in relation to Figures 6A through 6E, is also used to collapse the device 10 shown in Figures 7 through 9, except that a user grips the first corners 100a, 100b and third corners 102a, 102b to complete the procedure. As before, the resiliency of the frame members 14a, 14b advantageously allow a user to more conveniently store and transport the device 10 when not in use as a shade.

In the preferred embodiment, the device 10 further includes a plurality of straps 46. In one embodiment, each of the straps 46 includes hook tape and loop tape (e.g., VELCRO™), and the hook and loop tape removably attach together. In the embodiment shown, the device 10 includes three straps 46 on each side panel 12a, 12b, wherein one strap 46 is attached to the bottom edges 47a, 47b at an intermediate location, another strap 46 is attached adjacent the fourth corners 103a, 103b, and a third strap 46 is attached to the rear edges 45a, 45b at an intermediate location. As will be discussed in greater detail below, the straps 46 can be secured to the stroller to thereby inhibit the device 10 from inadvertently falling from the stroller.

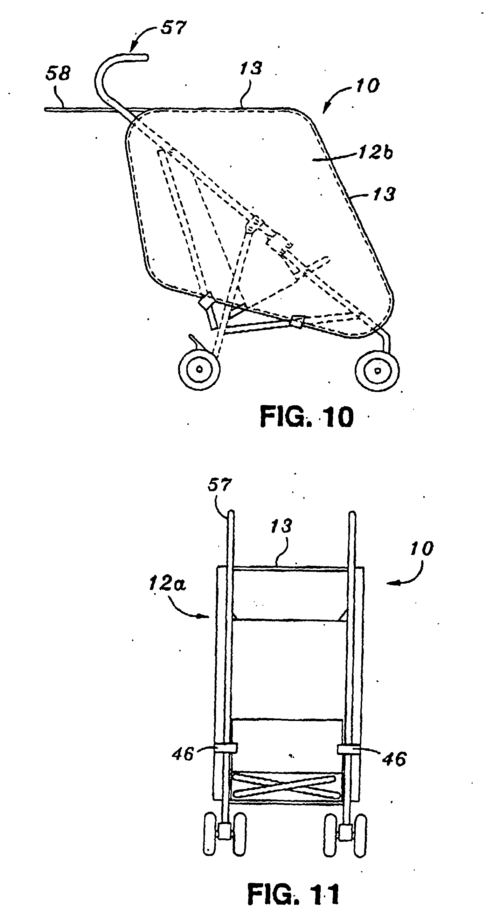

Turning now to Figures 10 and 11, the device 10 is shown in its deployed configuration, attached to a stroller 57. As shown, the side panels 12a, 12b are frictionally fit over the outside of the stroller 57. Also, the straps 46 are attached to the stroller 57 in order to further secure the device 10 thereto. More specifically, the hook tape portion of each strap 46 is looped around a portion of the stroller 57, and the loop tape portion of the corresponding strap 46 is pressed against the hook tape. As such, a portion of the stroller 57 is encircled by the strap 46 for more secure holding of the device 10 onto the stroller 57.

Furthermore, the rear flap 58 is stretched out over the outside of the back of the stroller 57 so that the rear flap 58 provides shade to the back of the child-occupant of the stroller 57. In one embodiment, the rear flap 58 includes an area of either pile or loop tape (not shown) which attaches to a strap 46 on the side panels 12a, 12b so that the rear flap 58 remains secured in place.

Thus, when the device 10 embodied in Figures 7 through 11 is placed over a stroller, the device 10 provides shade, protects from strong gusts of wind, protects from insects, and the like. It is noted that the configuration of the device 10 allows for nearly complete enclosure of the child-occupant within the stroller 57 for greater protection. Also, the mesh sections 108 allows for ventilation within the stroller and allows the occupant to see outwardly therefrom. Moreover, the person - pushing the stroller can see into the stroller through the observation window 56 while pushing, thereby ensuring that the child-occupant is safe and secure. Additionally, the straps 46 secure the device 10 to the stroller 57 such that the device 10 is less likely to inadvertently fall therefrom and expose the child-occupant. Finally, the resilient frame members 14a, 14b allow the device 10 to be quickly changed between a deployed configuration, and a collapsed configuration for more convenient movement and storage.

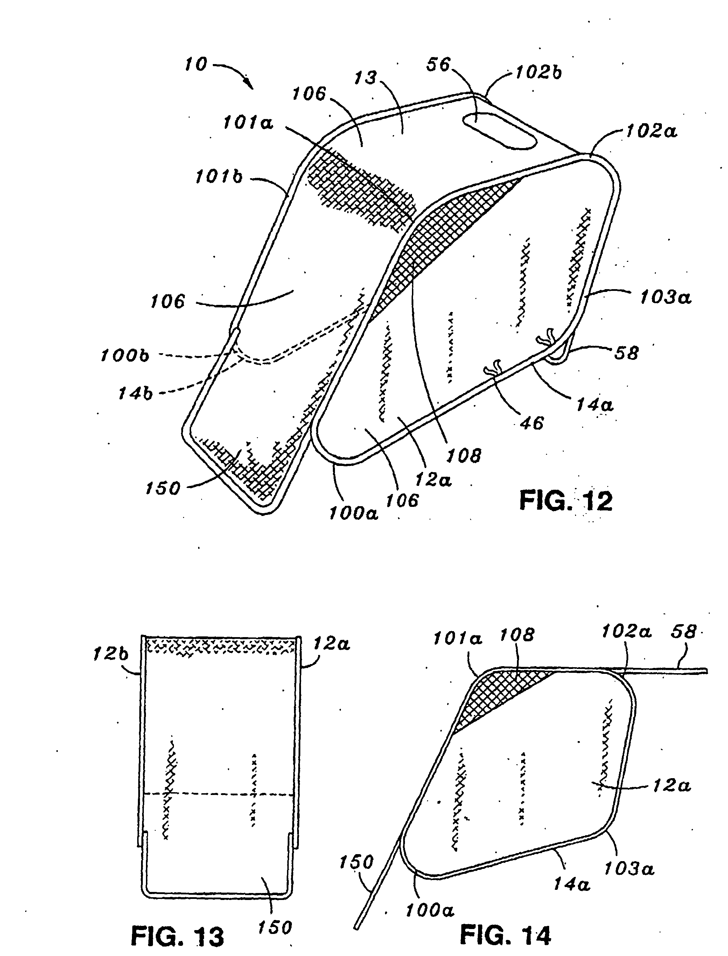

Turning now to Figures 12 through 16, an alternative embodiment of the device 10 is shown. This embodiment of the device 10 is similar to the device 10 discussed above in relation to Figures 7 through 11; however, this embodiment is adapted to provide shelter from the sun as well as inclement weather.

As shown, less surface area of the device 10 is made up of mesh sections 106 as compared to the device 10 illustrated in Figures 7 through 11. For instance, in the embodiment shown, the mesh sections 106 are relatively small and triangular and included only on the side panels 12a, 12b, adjacent the second corners 102a, 102b. Also, the intermediate sheet 13 includes no mesh section 108. Since only a small portion of the device 10 includes a mesh section 108, the device 10 is more likely to protect the child-occupant from sunlight or inclement weather. However, the mesh section 108, though relatively small, still allows for adequate ventilation.

Furthermore, the solid sections 106 are made of a waterproof material, such as nylon or polyvinyl chloride (PVC). As such, the device is more likely to keep the child-occupant dry, even if the stroller is used during inclement weather.

As shown in Figures 12 through 16, the device 10 includes a front flap 150. In the embodiment shown, a portion of the intermediate sheet 13 freely extends past the first corners 100a, 100b of the side panels 12a, 12b so as to define a front flap 150. The front flap 150 extends as such so as to provide more coverage of the child-occupant when seated in the stroller 57. Thus, the front flap 150 provides increased protection from the sunlight and inclement weather.

Moreover, the device 10 illustrated in Figures 12 through 16 include resilient frame members 14a, 14b attached around the periphery of the side panels 12a, 12b. As stated above, the frame members 14a, 14b can be bent and folded so as to change the device 10 into the collapsed configuration for more convenient movement and storage, and the frame members 14a, 14b are resilient and quickly return to their original shape so as to unfurl the side panels 12a, 12b, such that the device 10 quickly moves to its deployed configuration.

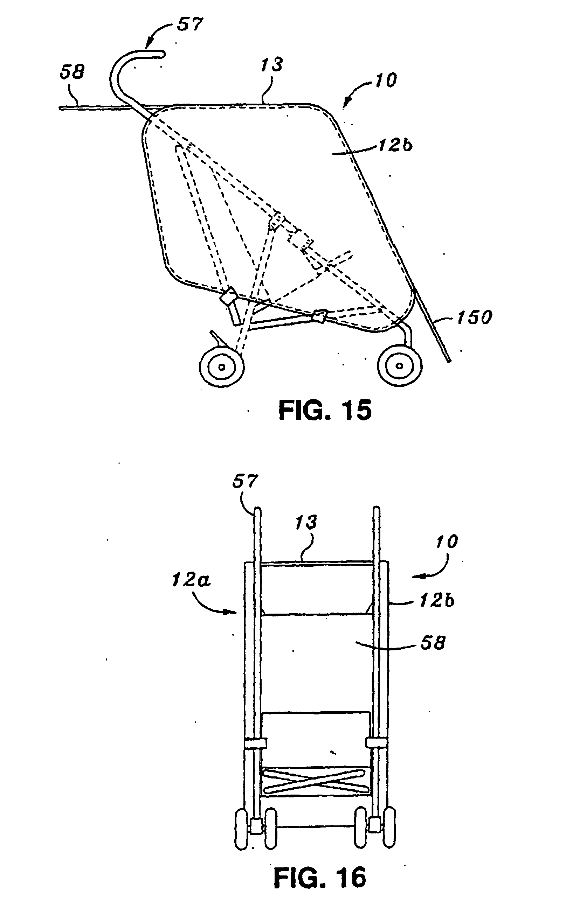

As shown in Figures 15 and 16, the device 10 can be positioned over the outside of a stroller 57 to protect the child-occupant from sunlight or inclement weather. The straps 46 can be used to attach the device 10 to the stroller 57 so that the device 10 does not inadvertently fall from the stroller 57. Also, it is noted that the front flap 150 extends substantially below the passenger area of the stroller 57, thereby further enclosing the child-occupant and providing increased protection to the child-occupant.

## Claims

1. A collapsible shade (10) adapted to partially block sunlight and capable of being positioned in both a deployed and collapsed configuration, the shade being
**characterised by**
a first and second side panel (12a, 12b) joined by an unsupported intermediate sheet (13), wherein the first side panel, second side panel, and intermediate sheet are made of a flexible material;
a first resilient frame member (14a) fastened to the first side panel (12a), the first resilient frame member (14a) adapted so as to unfurl the first side panel (12a) and hold the first side panel (12a) in tension when the shade is in the deployed configuration, the first resilient frame member (14a) also capable of being bent into at least one loop when the shade is in the collapsed configuration; and
a second resilient frame member (14b) fastened to the second side panel (12b), the second resilient frame member (14b) adapted so as to unfurl the second side panel (12b) and hold the second side panel (12b) in tension when the shade is in the deployed configuration, the second resilient frame member (14b) also capable of being bent into at least one loop when the shade is in the collapsed configuration;
wherein the looped first frame member (14a) at least partially overlays the looped second frame member (14b) when the shade is in the collapsed configuration.

2. The shade of Claim 1, wherein the intermediate sheet (13) can be arranged generally perpendicular to the first (12a) and second side (12b) panels when the shade is in the deployed configuration.

3. The shade of either of Claim 1 or Claim 2, wherein at least a portion of the first side panel (12a), second side panel (12b), and intermediate sheet (13) are each made of reflective material.

4. The shade of any preceding Claim, further comprising a strap (19) attached to the first side panel, the strap (19) capable of retaining the resilient frame members in overlaid loops so as to maintain the shade in the collapsed configuration.

5. The shade (10) of any preceding Claim, adapted to removably attach to a child car-seat.

6. The shade (10) of any of Claims 1 to 4, adapted to removably attach to a stroller.

7. The shade (10) of Claim 6, wherein at least a portion of the first side panel (12a) and the second side panel (12b) each comprise a mesh material.

8. The shade of Claim 7, wherein at least a portion of the intermediate sheet (13) comprises a mesh material.

9. The shade of any of Claims 6 to 8, further comprising a plurality of straps (19) individually attached to the first and second side panels (12a, 12b), the straps (19) capable of removably securing the shade to the stroller.

10. The shade of Claim 9, wherein the straps (19) comprise hook and loop fastening tape, the straps (19) capable of removably securing the shade (10) to the stroller.

11. The shade of any preceding Claim, wherein at least a portion of the first side panel (12a), second side panel (12b), and intermediate sheet (13) each comprise SPF 50 nylon.

12. The shade of any of Claims 6 to 10, wherein at least a portion of the intermediate sheet (13) is made of a transparent material.

13. The shade of any preceding Claim, wherein the first and second side panels (12a, 12b) each comprise a top edge, a front edge extending at an angle from the top edge, and a bottom edge extending at an angle from the front edge, and at least a portion of the intermediate sheet (13) is attached to the respective top edges of the first and second side panels, and at least a portion of the intermediate sheet (13) is attached to the respective front edges of the first and second side panels.

14. The shade of Claim 13, further comprising a front shield which is attached to the intermediate sheet (13) and freely hangs below respective bottom edges of the first and second side panels (12a, 12b).

15. The shade of either of Claim 13 or Claim 14, wherein the first and second side panels (12a, 12b) further comprise a rear edge connecting the top edge to the bottom edge on the first and second side panels, respectively, and wherein the shade also comprises a rear flap (58) made of flexible material which is attached to the intermediate sheet (13) and freely extends downwardly therefrom between respective rear edges of the first and second side panels.

16. The shade of any preceding Claim, wherein the first and second frame members (14a, 14b) are made of stainless steel.

17. The shade of any of Claims 6 to 10 or of Claim 12, wherein the first side panel (12a), the second side panel (12b), and the intermediate sheet (13) are at least partially made of a waterproof material.

18. The shade (10) of Claim 17, wherein the waterproof material is selected from a group consisting of polyvinyl chloride and nylon.

19. A method of attaching a collapsible shade (10) to a car seat that has an outer surface, the shade comprising:
a first side panel (12a) supported by a resilient first frame member (14a);
a second side panel (12b) supported by a resilient second frame member (14b); and
an unsupported intermediate sheet (13) that attaches the first side panel to the second side panel;
the shade (10) capable of being changed between a collapsed configuration, wherein the first and second frame members (14a, 14b) are bent into overlapping coils, and a deployed configuration, wherein the first and second frame members (14a, 14b) unfurl the first and second side panels respectively; the method comprising:
changing the shade (10) from a collapsed configuration to a deployed configuration; and
fitting the shade (10) over the outside surface of the car seat.

20. A method of attaching a collapsible shade to a stroller that has an outer surface, the shade comprising:
a first side panel (12a) supported by a resilient first frame member (14a);
a second side panel (12b) supported by a resilient second frame member (14b); and
an unsupported intermediate sheet (13) that attaches the first side panel to the second side panel;
the shade (10) capable of being changed between a collapsed configuration, wherein the first and second frame members (14a, 14b) are bent into overlapping coils, and a deployed configuration, wherein the first and second frame members (14a, 14b) unfurl the first and second side panels respectively; the method comprising:
changing the shade (10) from a collapsed configuration to a deployed configuration; and
fitting the shade (10) over the outside surface of the stroller.

21. The method of Claim 20, wherein the first and second side panels (12a, 12b) further comprise a plurality of straps (19) capable of removably securing the shade to the stroller, and the method further comprises the step of removably securing the straps (19) to the stroller.

## Patentansprüche

1. Zusammenlegbarer Schirm (10), welcher dazu ausgebildet ist, teilweise Sonnenlicht zu blockieren und welcher sowohl in einer entfalteten als auch einer zusammengelegten Konfiguration angeordnet werden kann,
wobei der Schirm **gekennzeichnet ist durch**
eine erste und eine zweite Seitenwand (12a, 12b), welche **durch** eine freitragende Zwischenlage (13) verbunden sind, wobei die erste Seitenwand, die zweite Seitenwand und die Zwischenlage aus einem flexiblen Material hergestellt sind;
ein erstes elastisches Rahmenelement (14a), welches an der ersten Seitenwand (12a) befestigt ist, wobei das erste elastische Rahmenelement (14a) dazu ausgebildet ist, die erste Seitenwand (12a) zu entfalten und die erste Seitenwand (12a) unter Spannung zu halten, wenn der Schirm in der entfalteten Konfiguration ist, wobei das erste elastische Rahmenelement (14a) auch zu wenigstens einer Schleife gebogen werden kann, wenn der Schirm in der zusammengelegten Konfiguration ist; und
ein zweites elastisches Rahmenelement (14b), welches an der zweiten Seitenwand (12b) befestigt ist, wobei das zweite elastische Rahmenelement (14b) dazu ausgebildet ist, die zweite Seitenwand (12b) zu entfalten und die zweite Seitenwand (12b) unter Spannung zu halten, wenn der Schirm in der entfalteten Konfiguration ist, wobei das zweite elastische Rahmenelement (14b) auch zu wenigstens einer Schleife gebogen werden kann, wenn der Schirm in der zusammengelegten Konfiguration ist;
wobei das in Schleifen gelegte erste Rahmenelement (14a) wenigstens teilweise das in Schleifen gelegte zweite Rahmenelement (14b) überlagert, wenn der Schirm in der zusammengelegten Konfiguration ist.

2. Schirm nach Anspruch 1, wobei die Zwischenlage (13) im Allgemeinen rechtwinklig zu der ersten (12a) und der zweiten Seitenwand (12b) angeordnet werden kann, wenn der Schirm in der entfalteten Konfiguration ist.

3. Schirm nach Anspruch 1 oder Anspruch 2, wobei wenigstens ein Abschnitt der ersten Seitenwand (12a), der zweiten Seitenwand (12b) und der Zwischenlage (13) jeweils aus einem reflektierenden Material hergestellt sind.

4. Schirm nach einem der vorhergehenden Ansprüche, ferner umfassend einen Riemen (19), welcher an der ersten Seitenwand angebracht ist, wobei der Riemen (19) die elastischen Rahmenelemente in übereinanderliegenden Schleifen so halten kann, dass der Schirm in der zusammengelegten Konfiguration gehalten wird.

5. Schirm (10) nach einem der vorhergehenden Ansprüche, welcher dazu ausgebildet ist, lösbar an einem Kinderautositz angebracht zu werden.

6. Schirm (10) nach einem der Ansprüche 1 bis 4, welcher dazu ausgebildet ist, lösbar an einem Kinderwagen angebracht zu werden.

7. Schirm (10) nach Anspruch 6, wobei wenigstens ein Abschnitt der ersten Seitenwand (12a) und der zweiten Seitenwand (12b) jeweils ein Netzmaterial umfassen.

8. Schirm nach Anspruch 7, wobei wenigstens ein Abschnitt der Zwischenlage (13) ein Netzmaterial umfasst.

9. Schirm nach einem der Ansprüche 6 bis 8, ferner umfassend eine Mehrzahl von Riemen (19), welche einzeln an der ersten und der zweiten Seitenwand (12a, 12b) angebracht sind, wobei die Riemen den Schirm lösbar an dem Kinderwagen befestigen können.

10. Schirm nach Anspruch 9, wobei die Riemen (19) ein Haken- und Schlaufen-Befestigungsband umfassen, wobei die Riemen (19) den Schirm (10) an dem Kinderwagen lösbar befestigen können.

11. Schirm nach einem der vorhergehenden Ansprüche, wobei wenigstens ein Abschnitt der ersten Seitenwand (12a), der zweiten Seitenwand (12b) und der Zwischenlage (13) jeweils SPF 50 Nylon umfassen.

12. Schirm nach einem der Ansprüche 6 bis 10, wobei wenigstens ein Abschnitt der Zwischenlage (13) aus einem transparenten Material hergestellt ist.

13. Schirm nach einem der vorhergehenden Ansprüche, wobei die erste und die zweite Seitenwand (12a, 12b) jeweils einen oberen Rand, einen vorderen Rand, welcher sich in einem Winkel vom oberen Rand aus erstreckt, und einen unteren Rand umfassen, welcher sich in einem Winkel von dem vorderen Rand aus erstreckt, und wobei wenigstens ein Abschnitt der Zwischenlage (13) an den jeweiligen oberen Rändern der ersten und der zweiten Seitenwand angebracht ist, und wobei wenigstens ein Abschnitt der Zwischenlage (13) an den jeweiligen vorderen Rändern der ersten und der zweiten Seitenwand angebracht ist.

14. Schirm nach Anspruch 13, ferner umfassend einen vorderen Schild, welcher an der Zwischenlage (13) angebracht ist und frei unter die jeweiligen unteren Ränder der ersten und der zweiten Seitenwand (12a, 12b) hängt.

15. Schirm nach Anspruch 13 oder Anspruch 14, wobei die erste und die zweite Seitenwand (12a, 12b) ferner einen hinteren Rand umfasst, welcher den oberen Rand mit dem unteren Rand jeweils an der ersten und der zweiten Seitenwand verbindet und wobei der Schirm auch eine aus einem flexiblen Material hergestellte hintere Klappe (58) umfasst, welche an der Zwischenlage (13) angebracht ist und sich frei von dieser zwischen jeweiligen hinteren Rändern der ersten und der zweiten Seitenwand nach unten erstreckt.

16. Schirm nach einem der vorhergehenden Ansprüche, wobei das erste und das zweite Rahmenelement (14a, 14b) aus rostfreiem Stahl hergestellt sind.

17. Schirm nach einem der Ansprüche 6 bis 10 oder Anspruch 12, wobei die erste Seitenwand (12a), die zweite Seitenwand (12b) und die Zwischenlage (13) wenigstens teilweise aus einem wasserfesten Material hergestellt sind.

18. Schirm (10) nach Anspruch 17, wobei das wasserfeste Material ausgewählt ist aus einer Gruppe bestehend aus Polyvinylchlorid und Nylon.

19. Verfahren zum Anbringen eines zusammenlegbaren Schirms (10) an einem Autositz mit eine Außenoberfläche, wobei der Schirm umfasst:
eine erste Seitenwand (12a), welche von einem elastischen ersten Rahmenelement (14a) abgestützt ist;
eine zweite Seitenwand (12b), welche von einem elastischen zweiten Rahmenelement (14b) abgestützt ist; und
eine frei tragende Zwischenlage (13), welche die erste Seitenwand an der zweiten Seitenwand anbringt;
wobei der Schirm (10) zwischen einer zusammengelegten Konfiguration, in welcher das erste und das zweite Rahmenelement (14a, 14b) zu übereinanderliegenden Wendeln gebogen sind, und einer entfalteten Konfiguration, in welcher das erste und das zweite Rahmenelement (14a, 14b) jeweils die erste und die zweite Seitenwand entfalten, verändert werden kann, wobei das Verfahren umfasst:
Verändern des Schirms (10) von einer zusammengelegten Konfiguration zu einer entfalteten Konfiguration; und
Befestigen des Schirms (10) über der Außenoberfläche des Autositzes.

20. Verfahren zum Anbringen eines zusammenlegbaren Schirms an einem Kinderwagen mit einer Außenoberfläche, wobei der Schirm umfasst:
eine erste Seitenwand (12a), welche von einem elastischen ersten Rahmenelement (14a) abgestützt ist;
eine zweite Seitenwand (12b), welche von einem elastischen zweiten Rahmenelement (14b) abgestützt ist; und
eine frei tragende Zwischenlage (13), welche die erste Seitenwand an der zweiten Seitenwand anbringt;
wobei der Schirm (10) zwischen einer zusammengelegten Konfiguration, in welcher das erste und das zweite Rahmenelement (14a, 14b) zu übereinanderliegenden Wendeln gebogen sind, und einer entfalteten Konfiguration, in welcher das erste und das zweite Rahmenelement (14a, 14b) jeweils die erste und die zweite Seitenwand entfalten, verändert werden kann;
das Verfahren umfassend:
Verändern des Schirms (10) von einer zusammengelegten Konfiguration zu einer entfalteten Konfiguration; und
Anbringen des Schirms (10) über der Außenoberfläche des Kinderwagens.

21. Verfahren nach Anspruch 20, wobei die erste und die zweite Seitenwand (12a, 12b) ferner eine Mehrzahl von Riemen (19) umfassen, welche den Schirm lösbar am Kinderwagen befestigen können, und wobei das Verfahren ferner den Schritt zur lösbaren Befestigung der Riemen (19) am Kinderwagen umfasst.

## Revendications

1. Pare-soleil pliable (10) adapté pour bloquer partiellement la lumière du soleil et capable d'être positionné dans une configuration déployée ou repliée, le pare-soleil étant **caractérisé par** :
un premier et un second panneau latéral (12a, 12b) joints par une feuille intermédiaire sans support (13), dans lequel le premier panneau latéral, le second panneau latéral et la feuille intermédiaire sont composés d'un matériau flexible ;
un premier élément de cadre élastique (14a) attaché au premier panneau latéral (12a), le premier élément de cadre élastique (14a) étant adapté pour dérouler le premier panneau latéral (12a) et maintenir le premier panneau latéral (12a) en tension lorsque le pare-soleil est dans la configuration déployée, le premier élément de cadre élastique (14a) étant également capable d'être replié en au moins une boucle lorsque le pare-soleil est dans la configuration pliée ; et
un second élément de cadre élastique (14b) attaché au second panneau latéral (12b), le second élément de cadre élastique (14b) étant adapté pour dérouler le second panneau latéral (12b) et maintenir le second panneau latéral (12b) en tension lorsque le pare-soleil est dans la configuration déployée, le second élément de cadre élastique (14b) étant également capable d'être replié en au moins une boucle lorsque le pare-soleil est dans la configuration repliée ;
dans lequel le premier élément de cadre en boucle (14a) recouvre au moins partiellement le second élément de cadre en boucle (14b) lorsque le pare-soleil est dans la configuration repliée.

2. Pare-soleil selon la revendication 1, dans lequel la feuille intermédiaire (13) peut être habituellement agencée perpendiculairement aux premier (12a) et second (14b) panneaux latéraux lorsque le pare-soleil est dans la configuration déployée.

3. Pare-soleil selon la revendication 1 ou la revendication 2, dans lequel au moins une partie du premier panneau latéral (12a), une partie du second panneau latéral (12b) et une partie de la feuille intermédiaire (13) sont chacune composées d'un matériau réfléchissant.

4. Pare-soleil selon l'une quelconque des revendications précédentes, comprenant en outre une lanière (19) attachée au premier panneau latéral, la lanière (19) étant capable de retenir les éléments de cadre élastiques en des boucles recouvertes de façon à maintenir le pare-soleil dans la configuration repliée.

5. Pare-soleil (10) selon l'une quelconque des revendications précédentes, adapté pour être attaché de manière amovible à un siège de voiture pour enfant.

6. Pare-soleil (10) selon l'une quelconque des revendications 1 à 4, adapté pour être attaché de manière amovible à une poussette.

7. Pare-soleil (10) selon la revendication 6, dans lequel au moins une partie du premier panneau latéral (12a) et une partie du second panneau latéral (12b) comprennent chacune un matériau à mailles.

8. Pare-soleil (10) selon la revendication 7, dans lequel au moins une partie de la feuille intermédiaire (13) comprend un matériau à mailles.

9. Pare-soleil selon l'une quelconque des revendications 6 à 8, comprenant en outre une pluralité de lanières (19) individuellement attachées aux premier et second panneaux latéraux (12a, 12b), les lanières (19) étant capables de fixer de manière amovible le pare-soleil à la poussette.

10. Pare-soleil selon la revendication 9, dans lequel les lanières (19) comprennent une fermeture à boucles et crochets, les lanières (19) étant capables de fixer de manière amovible le pare-soleil (10) à la poussette.

11. Pare-soleil selon l'une quelconque des revendications précédentes, dans lequel au moins une partie du premier panneau latéral (12a), une partie du second panneau latéral (12b) et une partie de la feuille intermédiaire (13) comprennent chacune du Nylon SPF 50.

12. Pare-soleil selon l'une quelconque des revendications 6 à 10, dans lequel au moins une partie de la feuille intermédiaire (13) est composée d'un matériau transparent.

13. Pare-soleil selon l'une quelconque des revendications précédentes, dans lequel les premier et second panneaux latéraux (12a, 12b) comprennent chacun un bord supérieur, un bord avant s'étendant selon un angle depuis le bord supérieur, et un bord inférieur s'étendant selon un angle depuis le bord avant, et au moins une partie de la feuille intermédiaire (13) est attachée aux bords supérieurs respectifs des premier et second panneaux latéraux, et au moins une partie de la feuille intermédiaire (13) est attachée aux bords avant respectifs des premier et second panneaux latéraux.

14. Pare-soleil selon la revendication 13, comprenant en outre un écran de protection avant qui est attaché à la feuille intermédiaire (13) et s'accroche librement en dessous des bords inférieurs respectifs des premier et second panneaux latéraux (12a, 12b).

15. Pare-soleil selon la revendication 13 ou la revendication 14, dans lequel les premier et second panneaux latéraux (12a, 12b) comprennent en outre un bord arrière reliant le bord supérieur au bord inférieur sur les premier et second panneaux latéraux, respectivement, et le pare-soleil comprenant également un rabat arrière (58) composé d'un matériau flexible qui est attaché à la feuille intermédiaire (13) et s'étend librement vers le bas depuis cette dernière entre les bords arrière respectifs des premier et second panneaux latéraux.

16. Pare-soleil selon l'une quelconque des revendications précédentes, dans lequel les premier et second éléments de cadre (14a, 14b) sont composés d'acier inoxydable.

17. Pare-soleil selon l'une quelconque des revendications 6 à 10 ou la revendication 12, dans lequel le premier panneau latéral (12a), le second panneau latéral (12b) et la feuille intermédiaire (13) sont composés au moins partiellement d'un matériau imperméable.

18. Pare-soleil (10) selon la revendication 17, dans lequel le matériau imperméable est choisi dans un groupe composé de chlorure de polyvinyle et de Nylon.

19. Procédé pour attacher un pare-soleil pliable (10) à un siège de voiture qui a une surface extérieure, le pare-soleil comprenant :
un premier panneau latéral (12a) supporté par un premier élément de cadre élastique (14a) ;
un second panneau latéral (12b) supporté par un second élément de cadre élastique (14b) ; et
une feuille intermédiaire sans support (13) qui attache le premier panneau latéral au second panneau latéral ;
le pare-soleil (10) étant capable de passer d'une configuration repliée, dans laquelle les premier et second éléments de cadre (14a, 14b) sont repliés en bobines superposées, à une configuration déployée, dans laquelle les premier et second éléments de cadre (14a, 14b) déroulent respectivement les premier et second panneaux latéraux ; le procédé comprenant :
le passage du pare-soleil (10) d'une configuration repliée à une configuration déployée ; et
la fixation du pare-soleil (10) au-dessus de la surface extérieure du siège de voiture.

20. Procédé pour attacher un pare-soleil pliable à une poussette qui a une surface extérieure, le pare-soleil comprenant :
un premier panneau latéral (12a) supporté par un premier élément de cadre élastique (14a) ;
un second panneau latéral (12b) supporté par un second élément de cadre élastique (14b) ; et
une feuille intermédiaire sans support (13) qui attache le premier panneau latéral au second panneau latéral ;
le pare-soleil (10) étant capable de passer d'une configuration repliée, dans laquelle les premier et second éléments de cadre (14a, 14b) sont repliés en bobines superposées, à une configuration déployée, dans laquelle les premier et second éléments de cadre (14a, 14b) déroulent respectivement les premier et second panneaux latéraux ; le procédé comprenant :
le passage du pare-soleil (10) d'une configuration repliée à une configuration déployée ; et
la fixation du pare-soleil (10) au-dessus de la surface extérieure de la poussette.

21. Procédé selon la revendication 20, dans lequel les premier et second panneaux latéraux (12a, 12b) comprennent en outre une pluralité de lanières (19) capables de fixer de manière amovible le pare-soleil à la poussette, et le procédé comprenant en outre l'étape consistant à fixer de manière amovible les lanières (19) à la poussette.
